# EUROPÄISCHE PATENTANMELDUNG

(11) **EP 1 036 703 A2**
(43) Veröffentlichungstag der Anmeldung: **20.09.2000**
(21) Anmeldenummer: 00104442.9
(22) Anmeldetag: 06.03.2000
(51) Int. Cl.: B60Q 1/115

(54) **Scheinwerfer**

(30) Priorität: 16.03.1999 DE 19911651
(71) Anmelder: Volkswagen Aktiengesellschaft, 38436 Wolfsburg (DE)
(72) Erfinder: Werner, Michael, 38106 Braunschweig (DE)

(57) **Zusammenfassung**

Die Erfindung betrifft einen Scheinwerfer (1), insbesondere für Kraftfahrzeuge, umfassend mindestens ein Scheinwerfermodul (3), ein Gehäuse (2) und eine elektrische Verstelleinrichtung (5), wobei der elektrischen Verstelleinrichtung (5) eine Soll-Betriebs- und eine Soll-Stand-Position des Scheinwerfermoduls (3) zum Gehäuse (2) zugeordnet sind, die automatisch bei Einleitung des Betriebs- oder Standmodus' durch die elektrische Verstelleinrichtung (5) einstellbar sind.

## Beschreibung

Die Erfindung betrifft einen Scheinwerfer, insbesondere für Kraftfahrzeuge, gemäß dem Oberbegriff des Patentanspruchs 1.

Übliche Scheinwerfer umfassen einen Abdeckrahmen, der fest mit einer im vorderen Bereich angeordneten Glasscheibe verbunden ist, die zusammen ein Gehäuse bilden. Im hinteren Bereich weist dabei das Gehäuse eine Öffnung auf, in die dann das eigentliche Scheinwerfermodul eingeführt und befestigt werden kann. Aufgrund der unvermeidlichen Herstellungstoleranzen muß jedes Scheinwerfermodul zu seinem Gehäuse justiert werden, um eine vorgeschriebene optimale Ausleuchtung zu erreichen. Hierzu ist es bekannt, das Scheinwerfermodul mittels mechanischer Stellschrauben in Relation zum Gehäuse zu bewegen. Dies geschieht üblicherweise einmalig beim Herstellungsprozeß. Aufgrund dieser notwendigen Justierung ist das Scheinwerfermodul nicht mehr symmetrisch zu dem Gehäuse angeordnet, was zu einer Störung des ästhetischen Gesamteindrucks führt. Zudem muß bei einem jeweiligen Wechsel der Scheinwerfermodule das neue Scheinwerfermodul wieder neu justiert werden, was mittels der schwer zugänglichen Stellschrauben sehr mühselig ist.

Aus der DE 39 30 589 ist eine Einstelleinrichtung für die Orientierung der Scheinwerfer eines Kraftfahrzeuges bekannt, umfassend einen elektrischen Steuermotor für die Veränderung der Position durch Änderung der Orientierung der Scheinwerfer, einen elektrischen Fühler für die Ist-Position der Scheinwerfer, einschließlich einer Spannungsquelle, an die ein erstes Bauteil mit variabler Impedanz angeschlossen ist zum Erzeugen eines ersten Signals, das veränderbar ist in Funktion von der Ist-Position der Scheinwerfer, Mittel für die Vorgabe der Soll-Position der Scheinwerfer, einschließlich einer Spannungsquelle, an die eine in ihrer Größe variable Impedanz angeschlossen ist zum Erzeugen eines zweiten in Abhängigkeit von der Sollposition der Scheinwerfer variablen Signals und einen Vergleichs- und Steuerschaltkreis, angeschlossen an den Fühler und an die Steuermittel und ausgebildet zum Bewirken der Betätigung des Motors, wenn die Ist-Position der Scheinwerfer von der Soll-Position abweicht, wobei die Einrichtung ferner eine dritte Komponente variabler Impedanz umfaßt für die manuelle Betätigung, um eine Veränderung des Signals festzulegen, das in der Funktion von dem ersten oder zweiten Bauteil mit variabler Impedanz geliefert wird, um mittels des Elektromotors die Eichung der Ursprungseinstellung der Scheinwerfer insbesondere bei ihrem Einbau in das Fahrzeug vorzunehmen.

Des weiteren ist aus der WO 97/13118 ein Scheinwerfer für ein Kraftfahrzeug bekannt, der sich mittels Infrarot-Sender und -Empfänger selbst justiert . Nachteilig an all den bekannten Scheinwerfern ist jedoch, daß der ästhetische Gesamteindruck aufgrund der Unsymmetrie zwischen Scheinwerfermodul und Gehäuse gestört ist.

Der Erfindung liegt daher das technische Problem zugrunde, einen Scheinwerfer zu schaffen, der bei optimaler Ausleuchtung einen verbesserten ästhetischen Gesamteindruck aufweist.

Die Lösung des technischen Problems ergibt sich durch die Merkmale des Patentanspruchs 1. Weitere vorteilhafte Ausgestaltungen der Erfindung ergeben sich aus den Unteransprüchen.

Dabei wird ausgenutzt, daß der ästhetische Gesamteindruck der Scheinwerfer insbesondere in unbeleuchteten Standphasen wahrgenommen wird, in denen eine Ausrichtung des Scheinwerfermoduls unnötig ist. Daher sind dem Scheinwerfermodul zwei Soll-Positionen zugeordnet, nämlich eine Soll-Betriebs-Position, wenn der Scheinwerfer leuchtet, und eine Soll-Stand-Position, wenn das Kraftfahrzeug abgestellt ist oder der Scheinwerfer ausgeschaltet ist. Hierzu wird das Scheinwerfermodul bei einem Wechsel des Betriebszustandes des Kraftfahrzeuges bzw. Scheinwerfers automatisch durch die elektrische Verstelleinrichtung verstellt, nämlich in eine vorzugsweise symmetrische Position zum Gehäuse als Soll-Stand-Position und in eine unter Beleuchtungsgesichtspunkten justierte Soll-Betriebs-Position bei eingeschaltetem Scheinwerfer.

Vorzugsweise wird die Soll-Betriebs-Position beim erstmaligen Einbau bestimmt und zusammen mit der Soll-Stand-Position in einem Speicher-Modul abgelegt.

In einer weiteren bevorzugten Ausführungsform wird der Betriebsmodus mit Einschaltung der Zündung oder mit Einschaltung der Scheinwerfer aktiviert.

Um beim Abschalten der Zündung noch den Scheinwerfer wieder in die Soll-Stand-Position bewegen zu können, ist der elektrischen Verstelleinrichtung ein elektrischer Energiespeicher, vorzugsweise in Form eines Kondensators, zugeordnet.

Die Erfindung wird nachfolgend anhand eines bevorzugten Ausführungsbeispiels näher erläutert. Die Fig. zeigen:
- Fig. 1: eine schematische Vorderansicht der vorderen Scheinwerfer eines Kraftfahrzeuges in einer Soll-Stand-Position,
- Fig. 2: eine schematische Vorderansicht der vorderen Scheinwerfer in einer Soll-Betriebs-Position und
- Fig. 3: ein schematisches Blockschaltbild zur automatischen Einstellung der Scheinwerfermodule.

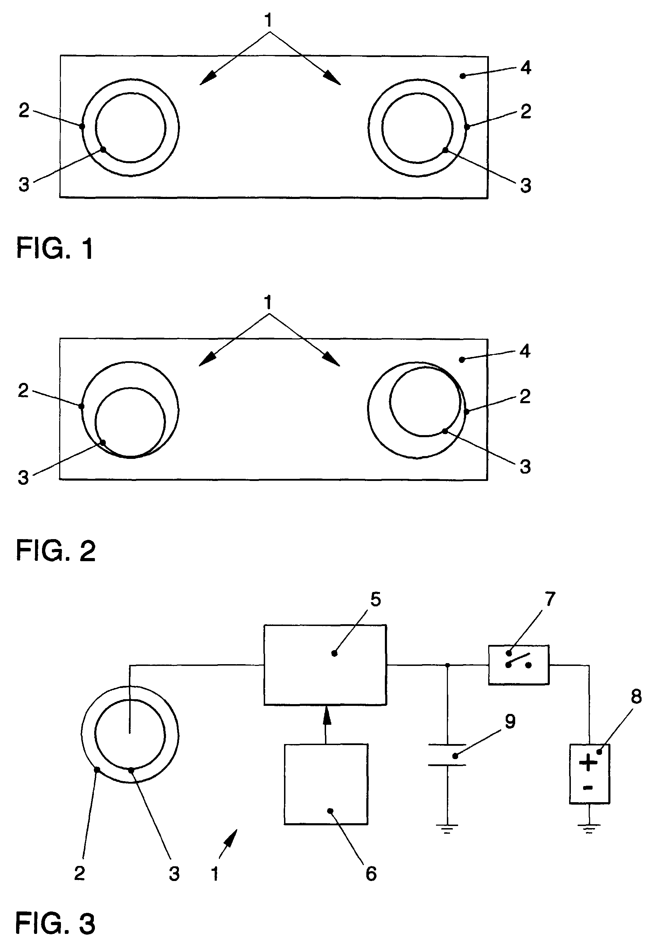

In der Fig. 1 ist schematisch die Vorderansicht auf zwei vordere Scheinwerfer 1 eines Kraftfahrzeuges dargestellt, wobei jeder Scheinwerfer 1 ein Gehäuse 2 und ein Scheinwerfermodul 3 umfaßt. Das Gehäuse 2 umfaßt einen nicht dargestellten Abdeckrahmen und eine Glas - oder Kunststoffscheibe und ist mit der Karosserie 4 oder einem anderen Fahrzeugteil fest verbunden. Das Scheinwerfermodul 3 umfaßt im wesentlichen einen Reflektor, die eigentliche Leuchte und elektrische Anschlüsse und Zuleitungen für die Leuchte. Die Scheinwerfermodule 3 sind symmetrisch zum Gehäuse 2 angeordnet, so daß sich ein geschlossener ästhetischer Gesamteindruck für den Betrachter ergibt, insbesondere wenn das Kraftfahrzeug unbeleuchtet abgestellt ist.

In der Fig. 2 ist beispielhaft dargestellt, wie die Scheinwerfermodule 3 in Relation zum Gehäuse 2 verstellt werden müssen, um eine gleichmäßige Ausleuchtung durch die beiden Scheinwerfer 1 zu erreichen.

In der Fig. 3 ist ein Blockschaltbild der Vorrichtung zur automatischen Einstellung der Scheinwerfermodule 3 dargestellt. Zusätzlich zum Gehäuse 2 und dem Scheinwerfermodul 3 umfaßt der Scheinwerfer 1 eine elektrische Verstelleinrichtung 5 mit zugeordnetem Speichermodul 6. Die elektrische Verstelleinrichtung 5 ist über einem Zündanlaßschalter 7 mit einer Fahrzeugbatterie 8 verbunden, zu denen parallel ein Kondensator 9 angeordnet ist.

In einem ersten Schritt wird, wie aus dem Stand der Technik bekannt, zunächst beim erstmaligen Einbau das Scheinwerfermodul 3 hinsichtlich einer optimierten Ausleuchtung justiert. Dies kann manuell oder wie bereits aus dem Stand der Technik ebenfalls bekannt, automatisch mittels geeigneter Sensoren erfolgen. Diese ermittelte Soll-Betriebs-Position gemäß Fig. 2 wird dann im Speichermodul 6 abgelegt. Hierzu kann ein Justier-Modus vorgesehen sein, so daß Justage und Abspeicherung automatisch erfolgen. Ist der Scheinwerfer mittels einer selbstjustierenden Sensorik ausgebildet, so kann gegebenenfalls auf das Speichermodul 6 verzichtet werden, so daß jeweils aktuell bei Inbetriebnahme der Scheinwerfer diese sich selbst justieren. Wird nun der Zündanlaßschalter 7 geschlossen, so kann daraus im Regelfall auf ein baldiges Sich-in-Bewegung-Setzen des Kraftfahrzeuges geschlossen werden. Über den Zündanlaßschalter wird dann die elektrische Verstelleinrichtung 5 mit elektrischer Energie versorgt. Die elektrische Verstelleinrichtung 5 ruft dann aus dem Speichermodul 6 die abgelegte Soll-Betriebs-Position ab und justiert entsprechend das Scheinwerfermodul 3. Wird anschließend das Kraftfahrzeug abgestellt und der Zündanlaßschalter 7 geöffnet, so wird dies von der elektrischen Verstelleinrichtung detektiert und das Scheinwerfermodul 3 wieder in die Soll-Stand -Position gemäß Fig. 1 bewegt. Die hierzu benötigte elektrische Energie bezieht die elektrische Verstelleinrichtung 5 vom Kondensator 9, der während der Betriebsphase durch die Batterie 9 oder die Lichtmaschine des Kraftfahrzeugs aufgeladen wurde.

## Patentansprüche

1. Scheinwerfer, insbesondere für Kraftfahrzeuge, umfassend mindestens ein Scheinwerfermodul, ein Gehäuse und eine elektrische Verstelleinrichtung,
**dadurch gekennzeichnet, daß**
der elektrischen Verstelleinrichtung (5) eine Soll-Betriebs- und eine Soll-Stand-Position des Scheinwerfermoduls (3) zum Gehäuse (2) zugeordnet sind, die automatisch bei Einleitung des Betriebs- oder Standmodus' durch die elektrische Verstelleinrichtung (5) einstellbar sind.

2. Scheinwerfer nach Anspruch 1, dadurch gekennzeichnet, daß in der Soll-Stand-Position das Scheinwerfermodul (3) zum Gehäuse (2) zentriert angeordnet ist.

3. Scheinwerfer nach Anspruch 1 oder 2, dadurch gekennzeichnet, daß die Soll-Betriebs- und/oder Soll-Stand-Position in einem Speicher-Modul (6) abgelegt sind.

4. Scheinwerfer nach einem der vorangegangenen Ansprüche, dadurch gekennzeichnet, daß der Betriebsmodus mit der Aktivierung der Zündung oder der Beleuchtung gekoppelt ist.

5. Scheinwerfer nach einem, der vorangegangenen Ansprüche, dadurch gekennzeichnet, daß der elektrischen Verstelleinrichtung (5) ein elektrischer Energiespeicher zugeordnet ist, mittels dessen über die elektrische Verstelleinrichtung (5) beim Wechsel vom Betriebs- zum Standmodus das Scheinwerfermodul (3) in die Soll-Stand-Position bewegbar ist.

6. Scheinwerfer nach Anspruch 5, dadurch gekennzeichnet, daß der elektrische Energiespeicher als Kondensator (9) ausgebildet ist.
